# EUROPEAN PATENT SPECIFICATION

(11) **EP 0 675 147 B1**
(45) Date of publication and mention of the grant of the patent: **22.08.2001**
(21) Application number: 95301948.6
(22) Date of filing: 23.03.1995
(51) Int. Cl.: C08G 65/32, C08G 63/66, C08L 67/06, C08G 63/82, C08G 63/668, C08G 18/42

(54) **Process for making a polyetherester**
Verfahren zur Darstellung eines Polyetheresters
Procédé de préparation d'un polyétherester

(30) Priority: 30.03.1994 US 220149; 18.04.1994 US 228845
(43) Date of publication of application: 04.10.1995
(73) Proprietor: ARCO Chemical Technology, L.P., Greenville, Delaware 19807 (US)
(72) Inventor: Klang, Jeffrey A., Exton, PA 19341 (US); Yang, Lau S., Wilmington, DE 19810 (US)
(74) Representative: Colmer, Stephen Gary

(56) References cited:
- EP-A- 0 599 561
- DE-A- 4 410 014
- US-A- 5 254 723

## Description

### Field of the Invention:

The invention relates to a process for making polyetheresters. In particular, the invention is a process for preparing polyetheresters from polyethers and carboxylic compounds selected from carboxylic acids and acid anhydrides. Polyetheresters are useful for a wide variety of applications, particularly in the unsaturated polyester and polyurethane industries.

### Background of the Invention:

Recently, we reported the discovery of a new reaction in which a cyclic anhydride randomly inserts into carbon-oxygen bonds of a polyether to generate a polymeric composition having both ether and ester functionalities (see U.S. Patent No. 5319006). A Lewis acid such as zinc chloride or zinc bromide catalyzes the reaction.

When a polyether polyol reacts with a cyclic, saturated anhydride, for example, the product is a saturated polyetherester polyol useful for polyurethane applications. Cyclic, unsaturated anhydrides such as maleic anhydride can be used in the process to make unsaturated polyetherester resins. The unsaturated resins can be reacted with vinyl monomers to produce cured polyetherester products.

Compared with the synthesis of conventional unsaturated polyester resins, the process for making polyetheresters by insertion of an anhydride has great flexibility. The average polyether chain length between ester linkages and the crosslinkability of the polyetherester are controlled by simply adjusting the proportion of cyclic, unsaturated anhydride used. Products having a wide range of unsaturation levels are available from a single polyether polyol and a single cyclic, unsaturated anhydride.

We also applied the Lewis acid-catalyzed insertion process to the reaction of polyethers and acyclic anhydrides to make glycol diesters (U.S. Patent No. 5,254,723). Using this process, a relatively crude polyether polyol mixture can be converted with acetic anhydride to a mixture of glycol diacetates. The glycol diacetates are easily purified by distillation, and can be used as solvents or chemical intermediates.

The Lewis acid-catalyzed process for anhydride insertion has some drawbacks, however. For example, the activity of the catalysts is somewhat lower than desirable. Typically, at least about 1 wt.% of the Lewis acid catalyst is needed for good activity in making the polyetherester. Second, the polyetherester products often have a higher degree of color than is desirable. Third, the presence of high levels of residual Lewis acid catalysts in the polyetherester product can have an unfavorable impact on performance in various end uses. Fourth, a significant amount of volatile by-products are generated in making the polyetheresters. In addition, Lewis acids are often not satisfactory for use in manufacturing operations because they tend to attack reactors and other processing equipment.

An improved process for making polyetheresters by anhydride insertion is needed. Preferably, the process could be used, like the Lewis acid-catalyzed process, to make a wide variety of polyetheresters. Preferably, the process would use low catalyst levels to reduce catalyst costs and minimize the impact of residual catalyst on polyetherester performance. A preferred process would give low-color products. In addition, a process that could be used with ordinary reactors and manufacturing equipment is needed.

A key limitation of the Lewis acid-catalyzed insertion process for making polyetheresters is that the reaction does not appear to work for carboxylic acids. As a practical matter, the cost and availability of various cyclic anhydrides limit the kinds of polyetherester products that can be made.

Because of the wide range of available dicarboxylic acids, and the relatively low cost of most dicarboxylic acids relative to the corresponding anhydrides, a process that would enable insertion of dicarboxylic acids into polyethers to give polyetheresters would be valuable. A preferred process could use aliphatic and aromatic dicarboxylic acids commonly used for making polyester resins, such as isophthalic acid, adipic acid, and the like. A preferred process would avoid some of the other disadvantages of the Lewis acid-catalyzed process for making polyetheresters by anhydride insertion, such as the generation of volatile by-products. Ideally, the process would give low-color polyetheresters useful for a variety of products, including unsaturated polyesters and polyurethanes.

We have now found a process for the preparation of polyetheresters from polyethers by reacting the polyether with a carboxylic compound, which process avoids many of the disadvantages of the Lewis acid process and enables an anhydride or an acid to be employed as the carboxylic compound.

### Summary of the Invention:

According to the present invention there is provided a process for making a polyetherester from a polyether, said process comprising reacting the polyether with at least one carboxylic compound selected from carboxylic acids and acid anhydrides in the presence of a catalyst selected from protic acids having a pKa less than 0, metal salts of said acids and mixtures of said acids and said salts, in an amount effective to promote random insertion of the carboxylic compound into polyether carbon-oxygen bonds and produce a polyetherester.

We have surprisingly found that strong protic acids and metal salts of these acids offer several key advantages over Lewis acids, which were previously found to promote anhydride insertion. First, the catalysts have much higher activity. Consequently, low catalyst levels can be used, which reduces cost and minimizes any adverse impact of catalyst residues on polyetherester quality and performance. Second, in contrast to processes performed with Lewis acid catalysts, the process of the invention can be used with ordinary reactors and manufacturing equipment. Third, the products made by the process of the invention are relatively low in color compared with products made using Lewis acids. Finally, polyetheresters made by the process of the invention cure faster and more completely in crosslinking reactions with vinyl monomers compared with polyetheresters made with Lewis acids, and consequently they give cured products with improved physical properties.

We have also found that insertion of carboxylic acids into polyethers to give polyetheresters, which apparently does not occur with Lewis acids, proceeds smoothly in the presence of a strong protic acid (pKa less than 0) or a metal salt of a strong protic acid. The process of the invention thereby enables the generation of volatile by-products to be minimized, and low-color, high-quality polyetheresters to be obtained.

Like the Lewis acid-catalyzed process, the process of the invention is highly flexible. Because the average polyether chain length between ester linkages can be conveniently controlled by adjusting the proportion of carboxylic compound used, a spectrum of products can be made from a few simple starting materials. The products are useful in a wide variety of end uses, particularly in the polyurethane and unsaturated polyester industries.

Moreover, since a wide variety of aliphatic and aromatic carboxylic acids, especially dicarboxylic acids, can be used in the process of the invention, the preparation of a broad array of polyetheresters is made possible and the utility of the insertion reaction is greatly expanded. Because the reaction works with simple, readily available dicarboxylic acids such as isophthalic acid and adipic acid, the process of the invention is an economical, general route to polyetheresters. Polyetheresters made by the process of the invention are useful in a variety of applications, particularly in the unsaturated polyester and polyurethane industries.

### Detailed Description of the Invention:

In the process of the invention, a polyether reacts with at least one carboxylic compound selected from carboxylic acids and anhydrides in the presence of a strong protic acid or a metal salt of a strong protic acid in an amount effective to promote insertion of the carboxylic compound into carbon-oxygen bonds of the polyether to produce a polyetherester. One or more acids, one or more anhydrides, and mixtures of one or more acids with one or more anhydrides may, of course, be used.

Polyethers suitable for use in the invention are those derived from base or acid-catalyzed ring-opening polymerization of cyclic ethers such as epoxides, oxetanes, oxolanes, and the like. The polyethers have repeat units of oxyalkylene groups (-O-A-) in which A has from 2 to 10 carbon atoms, preferably from 2 to 4 carbon atoms. The polyethers can have different end groups, depending upon how the polyethers are made or modified. For example, the polyether can have hydroxyl, ester, ether, acid, olefinic, or amino end groups, or the like, or combinations of these. Mixtures of different types of polyethers can be used.

Preferred polyethers for the process of the invention are polyether polyols. Suitable polyether polyols include, for example, polyoxypropylene polyols, polyoxyethylene polyols, ethylene oxide-propylene oxide copolymers, polytetramethylene ether glycols, oxetane polyols, and copolymers of tetrahydrofuran and epoxides. Typically, these polyols will have average hydroxyl functionalities from 2 to 8, and number average molecular weights from 250 to 25,000. The polyether polyols can be recycled polyols derived from a polyurethane foam, elastomer, sealant, or the like.

Carboxylic acids that may be used in the process of the invention include mono, di-, and polycarboxylic acids. The carboxylic acid can be saturated or unsaturated. Dicarboxylic acids are generally preferred. Where an unsaturated dicarboxylic acid is used, the unsaturation becomes incorporated into the polyetherester and can be used for crosslinking. Particularly preferred are linear, branched, and cyclic C₃-C₄₀ aliphatic dicarboxylic acids and C₈-C₄₀ aromatic dicarboxylic acids.

Suitable carboxylic acids for use in the invention include, for example, acetic acid, propionic acid, decanoic acid, benzoic acid, stearic acid, linoleic acid, oleic acid, adipic acid, suberic acid, malonic acid, succinic acid, glutaric acid, pimelic acid, itaconic acid, suberic acid, azelaic acid, sebacic acid, maleic acid, fumaric acid, citraconic acid, phthalic acid, isophthalic acid, terephthalic acid, dimer acids, tetrahydrophthalic acid, halogenated phthalic and tetrahydrophthalic acids, and the like. Preferred carboxylic acids are adipic acid, maleic acid, fumaric acid, phthalic acid, and isophthalic acid.

In one embodiment of the invention, the carboxylic acid is generated in situ by using, instead of the carboxylic acid, an anhydride and at least about one molar equivalent of water. For example, maleic anhydride, water, catalyst, and polyol can be combined and heated at a relatively mild temperature that is effective to cause hydrolysis of the anhydride (40-60°C) to produce maleic acid. The reaction temperature of the mixture is then elevated to promote insertion of the diacid into the polyether to generate a polyetherester product. See Example 4 below.

Anhydrides used in the process of the invention can be cyclic or acyclic, saturated or unsaturated. In a "cyclic" anhydride, the anhydride functionality is contained within a ring, such as in phthalic anhydride and maleic anhydride. "Acyclic" anhydrides, which include acetic anhydride, propionic anhydride, and the like, have no such ring. "Saturated" anhydrides contain no ethylenic unsaturation, although they may contain aromatic rings. Phthalic anhydride, propionic anhydride, and succinic anhydride are examples of saturated anhydrides. "Unsaturated" anhydrides contain ethylenic unsaturation. This unsaturation becomes incorporated into the polyetherester, and can be used for crosslinking. Examples include maleic anhydride, itaconic anhydride, and the like.

Specific examples of suitable anhydrides for use in the invention include, but are not limited to, acetic anhydride, propionic anhydride, maleic anhydride, phthalic anhydride, succinic anhydride, tetrahydrophthalic anhydride, citraconic anhydride, itaconic anhydride, and aryl-, alkyl- and halogen-substituted derivatives of these. Mixtures of anhydrides can be used. Where unsaturated polyetheresters are desired, maleic anhydride or mixtures of maleic anhydride and phthalic anhydride are particularly preferred.

As indicated above, mixtures of carboxylic acids and anhydrides may be used in the process of the invention.

A strong protic acid catalyzes the process of the invention. Suitable protic acids are inorganic and organic protic acids that have a pKa less than 0. Generally, the acids will be stronger than organic carboxylic acids. Suitable acids include arylsulfonic acids, alkylsulfonic acids, and halogenated alkyl- and arylsulfonic acids. Also suitable are hydrogen halides, halosulfonic acids, tetrafluoroboric acid, heteropolyacids, and sulfuric acid. Mixtures of different acids can be used. Examples of suitable acids include, but are not limited to, p-toluenesulfonic acid, trifluoromethanesulfonic acid (triflic acid), trichloromethanesulfonic acid, hydrochloric acid, hydrobromic acid, hydriodic acid, tetrafluoroboric acid, sulfuric acid, phosphotungstic acid, phosphomolybdic acid, and the like. Preferred protic acids are sulfuric acid, p-toluenesulfonic acid, and phosphotungstic acid.

The protic acid is used in an amount effective to promote random insertion of the carboxylic compound into polyether carbon-oxygen bonds and produce a polyetherester. The preferred amount to be used depends on many factors, including the desired reaction rate, the type of polyether and carboxylic compound used, catalyst type, reaction temperature, and other considerations. If the catalyst is omitted, insertion of the carboxylic compound does not occur; with too little catalyst, the insertion reaction is slower than desirable. Generally, it is preferred to use an amount of protic acid within the range of 0.01 to 1 weight percent based on the amount of polyether used. A more preferred range is from 0.05 to 0.5 weight percent.

We also found that metal salts of strong protic acids are effective catalysts for the process of the invention. The metal salts are derived from protic acids that have a pKa less than 0. Thus, the salts useful in the invention are generally derived from the protic acids described above as suitable for use in the process. Mixtures of strong protic acids and metal salts of the acids can be used.

Preferred metal salts useful as catalysts for the process of the invention are metal salts of arylsulfonic acids, alkylsulfonic acids, halogenated aryl- and alkylsulfonic acids, tetrafluoroboric acid, sulfuric acid, heteropolyacids, and halosulfonic acids. Sulfonic acid salts, especially triflate salts, are particularly preferred.

Preferred metal salts include metal salts of strong protic acids (pKa less than about 0) in which the metal is selected from Group IA, Group IIA, Group IIB, Group IB, Group IIIA, Group IVA, Group VA, and Group VIII. Thus, the metal can be, for example, lithium, potassium, magnesium, zinc, copper, aluminum, tin, antimony, iron, nickel.

Suitable metal salts include, but are not limited to, lithium triflate, sodium triflate, magnesium triflate, zinc triflate, copper(II) triflate, zinc tetrafluoroborate, zinc p-toluenesulfonate, aluminum triflate, silver tetrafluoroborate, iron(II) tetrafluoroborate, nickel(II) tetrafluoroborate, tin(II) triflate, and the like. Mixtures of metal salts can be used.

The metal salt is used in an amount effective to promote random insertion of the carboxylic compound into polyether carbon-oxygen bonds and produce a polyetherester. As with the protic acid catalysts, the preferred amount to be used depends on many factors, including the desired reaction rate, the type of polyether and carboxylic compound used, catalyst type, reaction temperature, and other factors. Generally, it is preferred to use an amount of metal salt within the range of 1 part per million (10⁻⁴ wt.%) to 1 weight percent based on the amount of polyether used. A more preferred range is from 10 parts per million to 0.5 weight percent.

The process of the invention is conveniently performed by combining the polyether, carboxylic compound, and catalyst in any desired order or manner, and heating the mixture at the desired reaction temperature under conditions effective to promote insertion of the carboxylic compound to produce a polyetherester. The progress of the reaction can be followed by measuring the acid number, which will decrease and level off as the reaction proceeds. The process can be performed batchwise, semi-batchwise, or continuously as desired. The relative amounts of polyether and carboxylic compound used can vary substantially depending upon the type of product desired, the desired degree of crosslinkability, and other factors. By way of example, generally it is preferred to use an amount of anhydride within the range of 2 to 80 weight percent based on the amount of polyetherester product to be made. A more preferred range is from 10 to 50 weight percent; most preferred is the range from 20 to 40 weight percent.

Polyetherester products obtained from the process of the invention commonly have a large proportion of carboxylic acid end groups. It is generally preferred to heat the polyetherester product with a glycol such a propylene glycol, ethylene glycol, dipropylene glycol, or the like, to esterify these acid groups with the glycol. The resulting polyetheresters have hydroxyl end groups and lower acid numbers. Compositions with low acid numbers are often needed for use in certain applications, such as, for example, formulation into polyurethane sealants and elastomers.

The amount of glycol used is preferably at least about 1 equivalent of glycol for each residual carboxylic acid end group. Typically, this amounts to heating the polyetherester with at least 5-10 wt.% of the glycol. The glycol is typically heated with the polyetherester at about the same temperature as that used for the insertion reaction until the acid number of the mixture drops to the desired level. Any excess glycol is removed by stripping. A thermosettable unsaturated polyetherester resin might be made, for example, by reacting a polyether polyol and 30 wt.% maleic acid to give a polyetherester product having an acid number in the 100 to 200 mg KOH/g range, then heating the product with 10 wt.% propylene glycol to produce a new polyetherester having an acid number within the range of 30 to 80 mg KOH/g.

Any convenient reaction temperature can be chosen for making polyetheresters by the process of the invention provided that the temperature is sufficient to promote insertion of the carboxylic compound into the polyether. Generally, however the reaction is too slow to be practical at temperatures below 60°C. Preferably, the process is performed at a temperature within the range of 80°C to 250°C. A more preferred range is from 100°C to 220°C; most preferred is the range from 150°C to 200°C.

It is preferred, although not necessary, to perform the process under an inert atmosphere of nitrogen, argon, or the like. Preferably, the reaction mixture is well agitated during the carboxylic acid-insertion process. Reactions are typically complete within 5-12 h.

The catalyst is optionally removed from the polyetherester product before using it in a polyurethane or polyester application. Catalyst removal, although not usually required, may be desirable for certain end-uses that are particularly sensitive to the presence of residual acids or salts. Any suitable method generally known in the art for removing acids or salts from polyethers and polyester resins can be used. Salts can often be removed by ordinary filtration or adsorption. Acidic catalysts can be removed, for example, using a basic ion-exchange resin, water washing, adsorption onto basic alumina or magnesium silicate, or by converting the acid to a salt and filtering to remove the salt.

The process of the invention offers several distinct advantages over the Lewis-acid catalyzed process for making polyetheresters from polyethers. First, the amount of strong protic acid or metal salt is much lower than the amount of Lewis acid needed. The Lewis acid-catalyzed process typically requires at least 1 wt.% of catalyst (see Comparative Example 8, Table 1), while the process of the invention is routinely performed with as little as 0.2 wt.% of strong protic acid (see Example 2), and, remarkably, as little as 0.003 wt.% (30 ppm) of a metal salt (see Examples 1 and 6). The ability to use less catalyst saves on catalyst cost.

High levels of residual catalyst can adversely impact the performance of polyetherester resins. The levels of Lewis acid previously used are high enough to impact performance. We found that the ability to use lower catalyst levels with the strong protic acids and metal salts results in better polyetherester products (see Example 9 and Comparative Example 10).

Polyetherester resins made by the process of the invention cure more rapidly than polyetherester resins made with Lewis acid catalysts (see the results of the SPI gel test for Examples 1-2 and Comparative Example 8). Faster, more complete curing with the polyetherester resins of the invention results in products with improved physical properties (see Example 9 and Comparative Example 10).

Another advantage of the process of the invention is that the products obtained with strong protic acid or metal salts as catalysts tend to be significantly lower in color. Particularly where the final product needs to be clear and colorless (such as a coating), low color is important.

A further advantage is that the process of the invention can be used with ordinary reactors and manufacturing equipment. Lewis acids are generally not satisfactory for use in manufacturing operations because they tend to attack the metals used in ordinary equipment, particularly at the rather high catalyst levels needed with Lewis acids. In contrast, many of the strong protic acids and metal salts useful in the process of the invention do not attack ordinary manufacturing reactors and equipment.

Yet another advantage is the ability to use dicarboxylic acids because the corresponding anhydrides are often not available or, if available, are more costly than the dicarboxylic acids. Because dicarboxylic acids can be used, the invention enables the preparation of a broad spectrum of polyetheresters, and greatly expands the utility of the insertion reaction for making polyetheresters.

The ability to use acids in place of anhydrides avoids another drawback of Lewis acid-catalyzed anhydride insertions. Volatile by-products generated in that process, including minor amounts of aldehydes and cyclic ethers, are minimized or are not generated in the process of the invention.

A wide variety of polyetherester products can be made, depending on the type of carboxylic compound used, the relative proportion of unsaturated to saturated carboxylic compound, the relative proportion of carboxylic compound to polyether, the nature and molecular weight of the polyether component, and other factors.

An unsaturated polyetherester resin can be made by reacting the polyether with at least some proportion of an unsaturated carboxylic compound. This may be achieved, preferably by use of an unsaturated dicarboxylic acid, or by including a cyclic, unsaturated anhydride such as maleic anhydride in the process. The unsaturated polyetherester resin can be used like conventional unsaturated polyester resins. For example, the polyetherester resin can be combined with a vinyl monomer such as styrene, and heated in the presence of a free-radical initiator to produce a cured polyetherester product. Suitable vinyl monomers and free-radical initiators are those well known in the art for curing conventional unsaturated polyesters. Specific examples of other useful vinyl monomers and free-radical initiators appear in U.S. Patent No. 5319006.

Saturated and unsaturated polyetheresters made by the process of the invention from polyethers and di- or polycarboxylic acids and/or cyclic anhydrides will be useful, for example, in polyurethane foams, elastomers, sealants, or adhesives, as replacements for polyether or polyester polyols.

Polyetherester products derived from reaction of a polyether and an acyclic anhydride or monocarboxylic acid will generally have different uses. If a large excess of acyclic anhydride is used, the products will be low molecular weight glycol diesters, potentially useful as solvents or chemical intermediates (see, for example, U.S. Patent No. 5,254,723). Polyethers having one or more ester end groups will generally result from reaction of polyethers with monocarboxylic acids or with a smaller proportion of the anhydride. The products will have lower molecular weights than the starting polyether because chain scission results from insertion of the acyclic anhydride or monocarboxylic acid. Because the insertion occurs at random places in the polyether chain, the products will also have broad molecular weight distributions. These products are expected to have utility in such specialized applications as functional fluids and drilling muds, as well as in various polyurethane and unsaturated polyester applications. The process of the invention can be tailored to give products having the desired functionalities and properties.

The following examples merely illustrate the invention.

### Example 1. Preparation of a Polyetherester Resin from a Polyether (Zinc Triflate Catalyst) and Curing of the Resin with Styrene

A one-liter resin kettle equipped with a mechanical stirrer, distillation head, thermocouple, and nitrogen inlet is charged with polyether triol (400 g, 3000 molecular weight propylene oxide/ethylene oxide copolymer containing about 10 wt.% of recurring units derived from ethylene oxide), maleic anhydride (171 g), and zinc triflate (0.017 g). The mixture is heated to 185°C for 3.5 h, at which point the acid number has dropped to 150. Propylene glycol (63 g) is added, and heating is continued for another 3 h, giving a product with acid number 62. After vacuum stripping, a clear, light yellow polyetherester resin is obtained.

The polyetherester resin is blended with styrene (60 wt.% resin). In the SPI 180°F Gel Time test, the resin shows a peak exotherm of 364°F at 7 minutes, 37 seconds. See Table 1.

### Example 2. Preparation of a Polyetherester Resin from a Polyether (p-Toluene-sulfonic acid Catalyst) and Curing of the Resin with Styrene

A two-liter resin kettle equipped as described in Example 1 is charged with the same polyether triol (1000 g), maleic anhydride (428 g), and p-toluenesulfonic acid (2.86 g). The mixture is heated to 185°C for 6 h, at which time the acid number has dropped to 147. Propylene glycol (142 g) is added, and the heating is continued for another 3 h, giving a product with acid number 80. After vacuum stripping, a clear, light yellow polyetherester resin is obtained.

The polyetherester resin is blended with styrene (60 wt.% resin). In the SPI 180°F Gel Time test, the resin shows a peak exotherm of 375°F at 7 minutes, 32 seconds. See Table 1.

### Examples 3-7. Preparation of Polyetherester Resins from Polyethers using Strong Protic Acids (pKa < 0) and Metal Salts of Strong Protic Acids

The procedure of Example 1 is followed using various strong protic acids (pKa less than about 0) or metal salts of strong protic acids as the catalyst. The amount of catalyst used, reaction times, and product colors appear in Table 1.

Each of the resulting polyetherester resins is tested in the SPI 180°F Gel Time test; peak exotherms observed in this test also appear in Table 1.

The results of Examples 1-7 show that strong acids (pKa less than about 0) and metal salts of strong acids are effective catalysts for making polyetheresters from polyethers and anhydrides by the process of the invention.

### Comparative Example 8. Preparation of a Polyetherester Resin from a Polyether (Zinc Chloride Catalyst) and Curing of the Resin with Styrene

A one-liter resin kettle equipped as in Example 1 is charged with the same polyether triol (400 g), maleic anhydride (171 g), and zinc chloride (5.71 g). The mixture is heated to 185°C for 8.5 h, at which point the acid number has dropped to 140. Propylene glycol (63 g) is added, and the heating is continued for another 3.5 h, giving a product with acid number 63. After vacuum stripping, a slightly cloudy, brown polyetherester resin is obtained.

The polyetherester resin is blended with styrene (60 wt.% resin). In the SPI 180°F Gel Time test, the resin shows a peak exotherm of 342°F at 11 minutes, 10 seconds.

This example shows that polyetherester resins can also be made with Lewis acids such as zinc chloride, but a higher level of catalyst is needed, the polyetherester resin is higher in color, and the resin is somewhat more sluggish in reacting in the SPI 180°F Gel Time test compared with resins made by the process of the invention.

### Example 9. Preparation of a Cured Polyetherester Product: Resin made with Zinc Triflate Catalyst

The polyetherester resin of Example 1 is blended with styrene (60 wt.% resin) and is poured into a mold and cured with cobalt naphthenate (0.5 wt.%) and methyl ethyl ketone peroxide (MEKP) (1.5 wt.%). The cured product has tensile strength = 6400 psi, tensile modulus = 337,000 psi, flex strength at 5% strain = 12,200 psi, and flex modulus = 360,000 psi. (1Psi ≈ 7000 Pa)

### Comparative Example 10. Preparation of a Cured Polyetherester Product: Resin made with Zinc Chloride Catalyst

The polyetherester resin of Comparative Example 8 is blended with styrene (60 wt.% resin) and is poured into a mold and cured with cobalt naphthenate (0.5 wt.%) and MEKP (1.5 wt.%). The cured product has tensile strength = 4900 psi, tensile modulus = 249,000 psi, flex strength at 5% strain = 9,300 psi, and flex modulus = 274,000 psi.

The results of Example 9 and Comparative Example 10 show that polyetheresters made by the process of the invention can offer performance advantages in cured polyetherester products compared with polyetherester resins made with Lewis acids.

### Comparative Examples 11-12. Preparation of Polyetherester Resins from Polyethers using Weak Protic Acids (pKa > 0)

The procedure of Example 1 is followed using 50% phosphoric acid (11 g) as the catalyst. The reaction mixture quickly turns dark brown. After heating for several hours, there is no change in the acid number, indicating that maleic anhydride is not being consumed. Similar results are obtained when oxalic acid (1.1 g) is used in place of phosphoric acid.

These results show that acids having a pKa greater than about 0 are not effective catalysts for the anhydride-insertion process of the invention.

### Example 13. Preparation of a Polyetherester Resin derived from Phthalic Anhydride and Maleic Anhydride

A three-liter resin kettle equipped as in Example 1 is charged with the same polyether triol (1650 g), maleic anhydride (487 g), phthalic anhydride (326 g), and zinc triflate (0.074 g), and the mixture is heated to 185°C. After 6.5 h, the acid number is 150. Propylene glycol (425 g) is added, and the heating is continued for another 6 h until the acid number reaches 67. After vacuum stripping, a clear, light-yellow resin is obtained.

The polyetherester resin is blended with styrene (60 wt.% resin) and is cured with cobalt naphthenate (0.5 wt.%) and MEKP (1.5 wt.%) as described above to form a clear solid polyetherester product with a hard, smooth surface.

### Example 14. Preparation of a Polyetherester Resin derived from Maleic Anhydride and Polyethylene Glycol

A three-neck round-bottom flask is charged with polyethylene glycol (1500 mol. wt., 100 g), maleic anhydride (43 g), and zinc triflate (0.07 g). The mixture is heated to 185°C for 3.5 h, at which time the acid number has dropped to 94. Propylene glycol (28 g) is added, and heating is continued for 4.5 h, after which the acid number is 45. After vacuum stripping, a clear, yellow liquid is obtained. The resin is blended with styrene (60 wt.% resin) and is cured as described above to give a clear, hard product.

### Examples 15-21. Polyetherester Resin Preparation

The method of Example 1 is repeated with each of the following compounds as a catalyst: lithium triflate (Li(O₃SCF₃)), aluminum triflate (Al(O₃SCF₃)₃), tin(II) triflate (Sn(O₃SCF₃)₂), silver triflate (Ag(O₃SCF₃)), nickel(II) tetrafluoroborate (Ni(BF₄)₂), iron(II) tetrafluoroborate (Fe(BF₄)₂), and zinc tetrafluoroborate (Zn(BF₄)₂). In each case, a polyetherester product is obtained.

**Table 1.**

| Preparation of Polyetheresters from Polyethers by Anhydride Insertion | | | | | |
|---|---|---|---|---|---|
| Ex. # | Catalyst | Wt.% cat. | Rxn. Time (h) | Peak Exotherm (°F): Gel Test | Color |
| 1 | zinc triflate | 0.003 | 6.5 | 364 | yellow |
| 2 | p-toluene-sulfonic acid | 0.2 | 9.0 | 375 | light yellow |
| 3 | sulfuric acid | 0.4 | 5.0 | 354 | yellow |
| 4 | phosphotungstic acid | 0.18 | 8.5 | 350 | light yellow |
| 5 | zinc p-toluene-sulfonate | 0.5 | 11 | 370 | light yellow |
| 6 | copper triflate | 0.003 | 5.0 | 290 | yellow |
| 7 | magnesium triflate | 0.03 | 10 | 340 | yellow |
| C8 | zinc chloride | 1.0 | 12 | 342 | amber |
| C11 | phosphoric acid | | *** | NA | NA |
| C12 | oxalic acid | | *** | NA | NA |

| | | | | | |
|---|---|---|---|---|---|
| *** Heating discontinued after several hours with no reaction evident. NA = Not applicable because a resin product was not obtained. | | | | | |

### Example 22. Preparation of a Polyetherester from Polypropylene Glycol and Adipic Acid using p-Toluenesulfonic Acid as a Catalyst

A one-liter reaction kettle is charged with a polypropylene glycol (about 2000 mol. wt., 500 g), adipic acid (125 g), and p-toluenesulfonic acid (6.25 g). The mixture is heated to 185°C. After 4 h, the acid number drops to 40 mg KOH/g. Propylene glycol (294 g) is added, and heating continues for another 4 h until the acid number is less than 2. Excess propylene glycol is removed by stripping, and a light yellow polyetherester product (607 g) is obtained. GPC results: Mn = 1975; Mw/Mn = 1.65.

### Example 23. Preparation of a Polyetherester from Polypropylene Glycol and Isophthalic Acid using p-Toluenesulfonic Acid as a Catalyst

Isophthalic acid (64 g), polypropylene glycol (about 2000 mol. wt., 255 g), and p-toluenesulfonic acid (3.2 g) are heated for 11 h at 185°C to produce a mixture that has an acid number of 50 mg KOH/g. Propylene glycol (158 g) is added, and heating continues for another 3 h to lower the acid number to less than 2. Excess propylene glycol is removed by stripping, and a yellow polyetherester product (315 g) is obtained.

### Example 24. Preparation of a Polyetherester from Polypropylene Glycol and Adipic Acid using Zinc Triflate as a Catalyst

The method of Example 22 is followed, but zinc triflate (0.31 g) is used instead of p-toluenesulfonic acid as a catalyst. After heating for 5.5 h at 185°C, the acid number is 51 mg KOH/g. Propylene glycol (300 g) is added, and heating continues for 10 h to lower the acid number to less than 2. Excess propylene glycol is stripped to give 530 g of light yellow polyetherester product.

### Example 25. Preparation of a Polyetherester from Polypropylene Glycol and Maleic Acid using p-Toluenesulfonic Acid as a Catalyst: In-situ Generation of Maleic Acid from Maleic Anhydride and Water

A two-liter resin kettle equipped with a mechanical stirrer, nitrogen sparge tube, thermocouple, and distillation head is charged with a polyether triol (3000 mol. wt., all-PO triol, 975 g), maleic anhydride (525 g), and p-toluenesulfonic acid (1.5 g). The mixture is heated to about 55°C until a homogeneous solution results. Water (152 g) is then added, and the mixture is stirred until the exotherm from the hydrolysis reaction of maleic anhydride and water dissipates. The temperature of the mixture is then gradually increased to 185°C and is held at that temperature until the acid number drops to 138 mg KOH/g. Propylene glycol (243 g) is added, and heating continues until the acid number falls to 53. After vacuum stripping, a clear, nearly water-white resin results.

The resin is blended with styrene (60 wt.% resin). In the SPI 180°F gel time test (Society of the Plastics Industry, Resin Technical Committee Test Procedure, published 1986), the resin shows a peak exotherm of 425°F at 5 minutes, 40 seconds. The resin can be cured with cobalt naphthenate and methyl ethyl ketone peroxide or a mixture of benzoyl peroxide and tert-butyl perbenzoate to produce a clear, hard plastic article.

### Example 26. Preparation of a Polyetherester by Insertion of Isophthalic Acid and Maleic Anhydride

A one-liter resin kettle is charged with the same polyether triol used in Example 25 (400 g), isophthalic acid (133 g), and p-toluenesulfonic acid (6.7 g). The mixture is heated to 185°C for 12 h to lower the acid number to 100 mg KOH/g. Maleic anhydride (133 g) is then added, and heating continues for 4 h, after which the acid number is 113. Propylene glycol (52 g) is added, and the mixture is heated to 185°C to reduce the acid number to 66. The mixture is vacuum stripped to give a clear, yellow resin. The resin can be blended with styrene and cured as previously described to give a clear, hard plastic article.

### Example 27. Preparation of a Low-Viscosity Polyether Diester Fluid from a Polyether Polyol and Coconut Fatty Acid

A one-liter reactor is charged with 300 g of a polyoxypropylene triol (3000 mol. wt., viscosity = 500 cps), 350 g of coconut fatty acid (a mixture of mono-carboxylic acids, ave. mol. wt. = 214), and 8.6 g of p-toluenesulfonic acid. The mixture is heated at 195°C for 14 h until the acid number is 12 mg KOH/g. Dipropylene glycol (15 g) is added, and the mixture is heated for another hour to give 650 g of a polyetherester product. The product is diluted with toluene, and is washed with aqueous sodium bicarbonate solution. Toluene is removed under vacuum to give a liquid product having an acid number < 2 mg KOH/g, and an average mol. wt. of about 800. The average polyether chain has about 7 oxypropylene units. The viscosity of the product is about 33 cps at room temperature, and about 17 cps at 40°C. (1cps = 10⁻³ Pa.s)

The preceding examples are meant as illustrations. The following claims define the scope of the invention.

## Claims

1. A process for making a polyetherester from a polyether, said process comprising reacting the polyether with at least one carboxylic compound selected from carboxylic acids and acid anhydrides in the presence of a catalyst selected from protic acids having a pKa less than 0, metal salts of said acids and mixtures of said acids and said salts, in an amount effective to promote random insertion of the carboxylic compound into polyether carbon-oxygen bonds and produce a polyetherester.

2. A process as claimed in claim 1 wherein the polyether is a polyether polyol selected from polyoxypropylene polyols, polyoxyethylene polyols, ethylene oxide-propylene oxide copolymers, polytetramethylene ether glycols, oxetane polyols, and copolymers of tetrahydrofuran and epoxides.

3. A process as claimed in claim 1 or claim 2 wherein the carboxylic compound comprises a dicarboxylic acid selected from linear, branched, or cyclic C₃-C₄₀ aliphatic dicarboxylic acids and C₈-C₄₀ aromatic dicarboxylic acids.

4. A process as claimed in claim 3 wherein the carboxylic compound comprises one or more dicarboxylic acids selected from adipic acid, maleic acid, fumaric acid, phthalic acid, and isophthalic acid.

5. A process as claimed in any one of claims 1 to 4 wherein the carboxylic compound comprises carboxylic acid generated in situ from the reaction of an anhydride and water.

6. A process as claimed in claim 1 or claim 2 wherein the carboxylic compound comprises acyclic anhydride.

7. A process as claimed in any one preceding claim wherein the protic acid is selected from arylsulfonic acids, alkylsulfonic acids, and halogenated alkyl- and arylsulfonic acids.

8. A process as claimed in any one of claims 1 to 6 wherein the protic acid is selected from hydrogen halides, halosulfonic acids, tetrafluoroboric acid, heteropolyacids, and sulfuric acid.

9. A process as claimed in any one preceding claim wherein the protic acid is used in an amount within the range of 0.01 to 1 weight percent based on the amount of polyether.

10. A process as claimed in any one of claims 1 to 8 wherein the metal salt is a metal salt derived from a protic acid selected from arylsulfonic acids, alkylsulfonic acids, halogenated alkyl and arylsulfonic acids, tetrafluoroboric acid, sulfuric acid, heteropolyacids, and halosulfonic acids.

11. A process as claimed in claim 10 wherein the metal salt includes a metal selected from Group IA, Group IIA, Group IB, Group IIIA, Group IVA, Group VA, and Group VIII of the Periodic Table.

12. A process as claimed in claim 10 or claim 11 wherein the metal salt is used in an amount within the range of about 1 part per million to about 1 weight percent based on the amount of polyether.

13. A process as claimed in any one preceding claim performed at a temperature within the range of 100°C to 220°C.

14. A process as claimed in any one preceding claim wherein the carboxylic compound comprises carboxylic acid and anhydride.

15. A process as claimed in any one preceding claim wherein the polyetherester is further reacted with glycol to give a new polyetherester that has a reduced acid number.

16. A process as claimed in any one preceding claim wherein the carboxylic compound includes at least one of an unsaturated dicarboxylic acid and a cyclic unsaturated anhydride and an unsaturated polyetherester is formed.

17. A process for making a cured polyetherester product, said process comprising:
(a) preparing an unsaturated polyetherester resin by the process of claim 16;
(b) combining the unsaturated polyetherester resin with a vinyl monomer and a free-radical initiator; and
(c) heating the mixture at a temperature effective to produce the cured polyetherester product.

18. A process as claimed in claim 17 wherein the unsaturated polyetherester resin from step (a) is further reacted with a glycol to give a new polyetherester that has a reduced acid number prior to combining the resin with the vinyl monomer and free-radical initiator in step (b).

19. A polyetherester made by the process of any one of claims 1 to 16.

20. A cured polyetherester product made by the process of claim 17 or claim 18.

## Patentansprüche

1. Verfahren zur Herstellung eines Polyetheresters aus einem Polyether, das Verfahren umfassend die Umsetzung des Polyethers mit mindestens einer Carbonsäureverbindung, ausgewählt aus Carbonsäuren und Carbonsäureanhydriden, in der Anwesenheit eines Katalysators, ausgewählt aus protischen Säuren mit einem pKa von weniger als 0, Metallsalzen dieser Säuren und Gemischen dieser Säuren und Salze, in einer ausreichenden Menge, um die zufällige Insertion der Carbonsäureverbindung in die Kohlenstoff-Sauerstoff-Bindungen des Polyethers zu fördern und einen Polyetherester zu erzeugen.

2. Verfahren nach Anspruch 1, in dem der Polyether ein Polyetherpolyol ist, ausgewählt aus Polyoxypropylenpolyolen, Polyoxyethylenpolyolen, Ethylenoxid-Propylenoxid-Copolymeren, Polytetramethylenetherglykolen, Oxetanpolyolen und Copolymeren von Tetrahydrofuran und Epoxiden.

3. Verfahren nach Anspruch 1 oder Anspruch 2, in dem die Carbonsäureverbindung eine Dicarbonsäure umfasst, ausgewählt aus linearen, verzweigten oder cyclischen aliphatischen C₃-C₄₀-Dicarbonsäuren und aromatischen C₈-C₄₀-Dicarbonsäuren.

4. Verfahren nach Anspruch 3, in dem die Carbonsäureverbindung eine oder mehrere Dicarbonsäuren umfasst, ausgewählt aus Adipinsäure, Maleinsäure, Fumarsäure, Phthalsäure und Isophthalsäure.

5. Verfahren nach einem der Ansprüche 1 bis 4, in dem die Carbonsäureverbindung eine Carbonsäure umfasst, die in situ aus der Reaktion eines Anhydrids und Wasser gebildet wird.

6. Verfahren nach Anspruch 1 oder Anspruch 2, in dem die Carbonsäureverbindung ein acyclisches Anhydrid umfasst.

7. Verfahren nach einem der vorstehenden Ansprüche, in dem die protische Säure ausgewählt wird aus Arylsulfonsäuren, Alkylsulfonsäuren und halogenierten Alkyl- und Arylsulfonsäuren.

8. Verfahren nach einem Ansprüche 1 bis 6, in dem die protische Säure ausgewählt wird aus Halogenwasserstoffen, Halogensulfonsäuren, Tetrafluorborsäure, Heteropolysäuren und Schwefelsäure.

9. Verfahren nach einem der vorstehenden Ansprüche, in dem die protische Säure in einer Menge im Bereich von 0,01 bis 1 Gew.-%, bezogen auf die Menge des Polyethers, verwendet wird.

10. Verfahren nach einem der Ansprüche 1 bis 8, in dem sich das Metallsalz aus einer protischen Säure, ausgewählt aus Arylsulfonsäuren, Alkylsulfonsäuren, halogenierten Alkyl- und Arylsulfonsäuren, Tetrafluorborsäure, Schwefelsäure, Heteropolysäuren und Halogensulfonsäuren, ableitet.

11. Verfahren nach Anspruch 10, in dem das Metallsalz ein Metall umfasst, das aus der-Gruppe IA, Gruppe IIA, Gruppe IB, Gruppe IIIA, Gruppe IVA, Gruppe VA und Gruppe VIII des Periodensystems ausgewählt wird.

12. Verfahren nach Anspruch 10 oder Anspruch 11, in dem das Metallsalz in einer Menge im Bereich von etwa 1 ppm bis etwa 1 Gew.-%, bezogen auf die Menge des Polyethers, verwendet wird.

13. Verfahren nach einem der vorstehenden Ansprüche, das bei einer Temperatur im Bereich von 100 °C bis 220 °C durchgeführt wird.

14. Verfahren nach einem der vorstehenden Ansprüche, in dem die Carbonsäureverbindung Carbonsäure und -anhydrid umfasst.

15. Verfahren nach einem der vorstehenden Ansprüche, in dem der Polyetherester weiterhin mit Glykol umgesetzt wird, um einen neuen Polyetherester zu bilden, der eine reduzierte Säurezahl aufweist.

16. Verfahren nach einem der vorstehenden Ansprüche, in dem die Carbonsäureverbindung zumindest eine ungesättigte Dicarbonsäure und ein cyclisches, ungesättigtes Anhydrid umfasst und ein ungesättigter Polyetherester gebildet wird.

17. Verfahren zur Herstellung eines gehärteten Polyetheresterprodukts, dieses Verfahren umfassend:
(a) die Herstellung eines ungesättigten Polyetheresterharzes durch das Verfahren nach Anspruch 16;
(b) das Zusammenbringen des ungesättigten Polyetheresterharzes mit einem Vinylmonomer und einem Radikalstarter; und
(c) das Erwärmen des Gemisches bei einer Temperatur, die ausreicht, um das gehärtete Polyetheresterprodukt zu erzeugen.

18. Verfahren nach Anspruch 17, in dem das ungesättigte Polyetheresterharz aus Schritt (a) außerdem mit einem Glykol unter Erhalt eines neuen Polyetheresters mit reduzierter Säurezahl umgesetzt wird, bevor das Harz mit dem Vinylmonomer und dem Radikalstarter im Schritt (b) zusammengebracht wird.

19. Polyetherester, hergestellt durch das Verfahren nach einem der Ansprüche 1 bis 16.

20. Gehärtetes Polyetheresterprodukt, hergestellt durch das Verfahren nach Anspruch 17 oder Anspruch 18.

## Revendications

1. Procédé de préparation d'un polyétherester à partir d'un polyéther, ledit procédé comprenant la réaction du polyéther avec au moins un composé carboxylique choisi parmi les acides carboxyliques et les anhydrides d'acides carboxyliques en présence d'un catalyseur choisi parmi les acides protiques ayant un pKa inférieur à 0, les sels métalliques desdits acides et les mélanges desdits acides et desdits sels, en une quantité efficace pour favoriser l'insertion au hasard du composé carboxylique dans des liaisons carbone-oxygène du polyéther et pour produire un polyétherester.

2. Procédé selon la revendication 1 où le polyéther est un polyétherpolyol choisi parmi les polyoxypropylènepolyols, les polyoxyéthylènepolyols, les copolymères oxyde d'éthylène-oxyde de propylène, les polytétraméthylèneétherglycols, les oxétanepolyols et les copolymères du tétrahydrofurane et d'époxydes.

3. Procédé selon la revendication 1 ou la revendication 2 où le composé carboxylique comprend un acide dicarboxylique choisi parmi les acides dicarboxyliques aliphatiques en C₃-C₄₀ linéaires, ramifiés ou cycliques et les acides dicarboxyliques aromatiques en C₈-C₄₀.

4. Procédé selon la revendication 3 où le composé carboxylique comprend un ou plusieurs acides dicarboxyliques choisis parmi l'acide adipique, l'acide maléique, l'acide fumarique, l'acide phtalique et l'acide isophtalique.

5. Procédé selon l'une quelconque des revendications 1 à 4 où le composé carboxylique comprend un acide carboxylique produit in situ par la réaction d'un anhydride et d'eau.

6. Procédé selon la revendication 1 ou la revendication 2 où le composé carboxylique comprend un anhydride acyclique.

7. Procédé selon l'une quelconque des revendications précédentes où l'acide protique est choisi parmi les acides arylsulfoniques, les acides alkylsulfoniques et les acides alkyl- et arylsulfoniques halogénés.

8. Procédé selon l'une quelconque des revendications 1 à 6 où l'acide protique est choisi parmi les halogénures d'hydrogène, les acides halogénosulfoniques, l'acide tétrafluoroborique, les hétéropolyacides et l'acide sulfurique.

9. Procédé selon l'une quelconque des revendications précédentes où l'acide protique est utilisé en une quantité dans le domaine de 0,01 à 1 % en masse par rapport à la quantité de polyéther.

10. Procédé selon l'une quelconque des revendications 1 à 8 où le sel métallique est un sel métallique dérivé d'un acide protique choisi parmi les acides arylsulfoniques, les acides alkylsulfoniques, les acides alkyl- et arylsulfoniques halogénés, l'acide tétrafluoroborique, l'acide sulfurique, les hétéropolyacides et les acides halogénosulfoniques.

11. Procédé selon la revendication 10 où le sel métallique inclut un métal choisi dans le groupe IA, le groupe IIA, le groupe IB, le groupe IIIA, le groupe IVA, le groupe VA et le groupe VIII du tableau périodique.

12. Procédé selon la revendication 10 ou la revendication 11 où le sel métallique est utilisé en une quantité dans le domaine d'environ 1 partie par million à environ 1 % en masse par rapport à la quantité de polyéther.

13. Procédé selon l'une quelconque des revendications précédentes mis en oeuvre à une température dans le domaine de 100°C à 220°C.

14. Procédé selon l'une quelconque des revendications précédentes où le composé carboxylique comprend un acide et un anhydride carboxyliques.

15. Procédé selon l'une quelconque des revendications précédentes où le polyétherester est mis à réagir en outre avec un glycol pour donner un nouveau polyétherester qui a un indice d'acide réduit.

16. Procédé selon l'une quelconque des revendications précédentes où le composé carboxylique inclut au moins un composé parmi un acide dicarboxylique insaturé et un anhydride insaturé cyclique, et un polyétherester insaturé est formé.

17. Procédé de préparation d'un produit polyétherester réticulé, ledit procédé comprenant :
(a) la préparation d'une résine de polyétherester insaturé par le procédé selon la revendication 16 ;
(b) la combinaison de la résine de polyétherester insaturé avec un monomère vinylique et un initiateur de radicaux libres ; et
(c) le chauffage du mélange à une température efficace pour produire le produit polyétherester réticulé.

18. Procédé selon la revendication 17 où la résine de polyétherester insaturé de l'étape (a) est mise à réagir en outre avec un glycol pour donner un nouveau polyétherester qui a un indice d'acide réduit avant de combiner la résine avec le monomère vinylique et l'initiateur de radicaux libres dans l'étape (b).

19. Polyétherester préparé par le procédé selon l'une quelconque des revendications 1 à 16.

20. Produit polyétherester réticulé préparé par le procédé selon la revendication 17 ou la revendication 18.
